(19) Europäisches Patentamt
European Patent Office
Office européen des brevets

(11) **EP 0 714 538 B1**

(12) **EUROPÄISCHE PATENTSCHRIFT**

(45) Veröffentlichungstag und Bekanntmachung des Hinweises auf die Patenterteilung:
**12.02.1997 Patentblatt 1997/07**

(21) Anmeldenummer: **94923645.9**

(22) Anmeldetag: **09.08.1994**

(51) Int Cl.6: **G06K 15/12**

(86) Internationale Anmeldenummer:
**PCT/DE94/00919**

(87) Internationale Veröffentlichungsnummer:
**WO 95/05643 (23.02.1995 Gazette 1995/09)**

(54) **SYSTEM UND VERFAHREN ZUR UMSETZUNG VON BILDINFORMATIONEN**

PROCESS AND DEVICE FOR CONVERTING IMAGE INFORMATION

SYSTEME ET PROCEDE PERMETTANT DE CONVERTIR DES INFORMATIONS IMAGE

(84) Benannte Vertragsstaaten:
**BE FR NL**

(30) Priorität: **19.08.1993 DE 4327967**

(43) Veröffentlichungstag der Anmeldung:
**05.06.1996 Patentblatt 1996/23**

(73) Patentinhaber: **Océ Printing Systems GmbH 85586 Poing (DE)**

(72) Erfinder:
• **GOLDMANN, Gerd D-81739 München (DE)**
• **LÖBEL, Markus D-85570 Markt Schwaben (DE)**

(74) Vertreter: **Schaumburg, Thoenes & Thurn Mauerkircherstrasse 31 81679 München (DE)**

(56) Entgegenhaltungen:
**EP-A- 0 246 457**    **DE-A- 2 941 667**
**US-A- 4 396 928**    **US-A- 4 700 201**
**US-A- 5 282 057**

**Beschreibung**

Die Erfindung betrifft ein System und ein Verfahren zur Umsetzung von in Matrixform vorliegenden, für positive Bildgenerierung geeigneten Bildinformationen in für inverse Bildgenerierung geeignete Bildinformationen für ein elektrografisches Druck- oder Kopiergerät.

Aus EP 0 403 476 B1 ist ein optischer Zeichengenerator für einen elektrofotografischen Drucker bekannt, mit dessen Hilfe eine in Form von elektronischen Daten vorliegende Druckinformation in ein optisches Bild umgesetzt wird. Das optische Bild wird dann auf eine fotoleitende Schicht, beispielsweise eine kontinuierlich umlaufende Ladungsspeichertrommel des Druckers durch Belichtung übertragen, um ein latentes Ladungsbild zu erzeugen. Dieses Ladungsbild wird in bekannter Weise entwickelt und beispielsweise auf Papier umgedruckt.

Von Vorteil für diese Anwendung sind optische Zeichengeneratoren, die die Ladungsspeichertrommel zeilenförmig in voller Länge belichten, da dann der Belichtungsvorgang, im Gegensatz zu einer Belichtung mittels eines Lasers, ohne eine mechanische Bewegung ausgeführt werden kann. Ein solcher zeilenförmiger Aufbau des optischen Zeichengenerators bedingt für jeden Abbildungspunkt innerhalb einer Zeile eine eigene Lichtquelle. Vorzugsweise werden Leuchtdioden als Lichtquellen eingesetzt, da diese Bauelemente die Möglichkeit einer sehr kompakten Anordnung bieten.

Bei dem bekannten Zeichengenerator werden durch die Leuchtdioden die Rasterpunkte der Matrix auf der Ladungsspeichertrommel belichtet, auf denen sich bei der Bildentwicklung Tonerteilchen ablagern sollen. Der Rasterpunkt ist also mit dem Tonerpunkt identisch. Der Punktdurchmesser eines belichteten Rasterpunktes wird durch die Fokusierung der Leuchtdiode, also durch deren auf der fotoleitenden Schicht auftreffenden Lichtkegel bestimmt.

Die Rasterpunkte sind in einem definierten Abstand zueinander angeordnet. Der Abstand zwischen zwei Rasterpunkten ist als Rastermaß definiert. Beim Stand der Technik ist der Punktdurchmesser größer als das Rastermaß. Deshalb kommt es bei einer Belichtung zweier benachbarter Rasterpunkte zu einer Überlappung der Tonerpunkte. Diese Überlappung führt zu einer verbesserten Darstellung des wiederzugebenden Bildes. Das Verhältnis des Punktdurchmessers zum Rastermaß ist als Überlappungsgrad definiert. Der Überlappungsgrad liegt üblicherweise im Bereich zwischen 1,4 bis 2.

Neben dieser ersten Entwicklungsmethode, wie sie beim genannten Stand der Technik Verwendung findet, also der Einfärbung der entladenen Bereiche (= DAD Discharched Area Development), gibt es eine zweite Entwicklungsmethode: Die Einfärbung der aufgeladenen Bereiche (= CAD Charged Area Development).

Während bei der ersten Entwicklungsmethode die entladenen Flächenbereiche der fotoempfindlichen Schicht der zu druckenden Information entsprechen, entspricht bei der zweiten Entwicklungsmethode der geladene Flächenbereich der zu druckenden Information. Um die Voraussetzung für diese zweite Entwicklungsmethode zu schaffen, wird der Hintergrund der zu druckenden Information auf der fotoempfindlichen Schicht belichtet. Diese Belichtung kann wie bei der ersten Entwicklungsmethode wahlweise durch einen Laserstrahl, einen Laserdiodenstrahl, eine Leuchtdiodenzeile oder ähnliches erfolgen.

Da üblicherweise die erstgenannte Entwicklungsmethode in elektrografischen Druck- oder Kopiergeräten angewendet wird, gibt es für dieses Verfahren auf dem Markt entsprechend viele, zum Teil standardisierte Zeichensätze in Form von sogenannten "Bitmaps". Als Bitmap bezeichnet man eine definierte Matrix, in der zur Erzeugung eines Zeichens oder eines Bildes bestimmte Rasterpunkte binär gesetzt sind.

Solche Bitmaps sind beispielsweise aus US 4 635 081 bekannt. In einem Speicher sind die einzelnen darzustellenden Zeichenelemente in Zeichenfeldern (Bitmaps) gleicher Größe in Form von Binärzeichen gespeichert. Ein Zeichenfeld für ein Zeichen der Größe 1/10 x 1/6 Zoll (1 Zoll = 2,54 cm) weist 18 Spalten und 24 Zeilen und damit 432 Kreuzungsstellen auf. Jede Kreuzungsstelle, die einem Rasterpunkt entspricht, ist ein binärer Speicherplatz zugeordnet.

Es hat sich nun gezeigt, daß zur inversen Bildgenerierung ein simples Umsetzen der Bildinformationen für positive Bildgenerierung in Bildinformationen für inverse Bildgenerierung, also durch Setzen der nicht gesetzten Rasterpunkte einer Matrix und Rücksetzen der gesetzten Rasterpunkte der Matrix, keine befriedigende Bildwiedergabe möglich ist. Beispielsweise werden dünne Linien nur noch schwach oder gar nicht mehr abgebildet.

Dies geschieht aufgrund der oben beschriebenen Überlappung der auf der fotoempfindlichen Schicht auftreffenden Lichtkegel. Da die Durchmesser der Lichtkegel größer als das Rastermaß der Matrix sind verbleiben nur sehr kleine geladene Flächen auf der fotoempfindlichen Schicht. Nach der Beziehung

$$\text{Strichstärke}_{invers} = \text{Strichstärke}_{positiv} - (\text{Rastermaß} \cdot (\text{Überlappungsfaktor} - 1))$$

kann die durch einfaches Invertieren erzielbare Strichstärke ermittelt werden. Bei entsprechend großem Überlappungsgrad kann ein Zeichen mit einer 1-Punkt-Strichstärke sogar verschwinden.

Da einfaches Invertieren der üblichen Bitmaps demzufolge nicht zum erwünschten Erfolg führt, wurden speziell für die inverse Bildgenerierung Zeichensätze entwickelt. Bei der Entwicklung wurde versucht, durch manuelles Setzen einzelner Rasterpunkte der Bitmap-Matrizen den gleichen visuellen Eindruck der Zeichen und Grafiken zu erlangen, wie sie bei üblicher Bildgenerierung erzielt werden. Abhängig davon, welches Bildgenerierungsverfahren verwendet wird, muß demnach ein spezieller Zeichensatz bereitgestellt werden. Es müssen also zwei unterschiedliche Zeichensätze zur Erzielung des gleichen Bildwiedergabeergebnises verfügbar sein.

Der Erfindung liegt deshalb die Aufgabe zugrunde, ein System und ein Verfahren zur Umsetzung von in Matrixform vorliegenden, für positive Bildgenerierung geeigneten Bildinformationen in für inverse Bildgenerierung geeignete Bildinformationen für ein elektrografisches Druck- oder Kopiergerät aufzuzeigen, mit dessen Hilfe auf spezielle Zeichensätze zur inversen Bildgenerierung verzichtet werden kann.

Diese Aufgabe wird durch das System gemäß der Merkmale des Patentanspruchs 1 sowie durch das in Patentanspruch 6 angegebene Verfahren gelöst.

Die von einer Datenaufbereitungseinrichtung aufbereiteten Bildinformationen werden - vor ihrer Übergabe an eine Bildwiedergabeeinrichtung - in eine Speichereinrichtung einer Umsetzeinrichtung übertragen. In der Speichereinrichtung sind stets mindestens so viele aufeinanderfolgende Zeilen der für positive Bildgenerierung geeigneten Bildinformationen speicherbar, daß die für inverse Bildgenerierung benötigten Bildinformationen verfügbar sind. Die Speichereinrichtung ist mit einer ODER-Verknüpfungslogik gekoppelt. Die ODER-Verknüpfungslogik hat wahlfreien Zugriff auf die zur inversen Bildgenerierung benötigten Speicherzellen. Das Verknüpfungsergebnis, nämlich die generierte Bildinformation, wird von der Umsetzeinrichtung an die Bildwiedergabeeinrichtung ausgegeben.

Gemäß der erfindungsgemäßen Lösung werden zusätzlich zu den für positive Bildgenerierung an bestimmten Rasterpunkten einer Matrix gesetzten Bildinformationen weitere Bildinformationen, von sich in unmittelbarer Nachbarschaft zu den genannten Rasterpunkten befindlichen Rasterpunkten gesetzt. Dies führt zu einer solchen Verbreiterung von Strichstärken und Tonerpunkten eines Zeichens oder einer Grafik, daß ein invers generiertes Druckbild zumindest die gleiche Bildqualität aufweist, wie ein nach positiv generiertes Druckbild.

Mit Hilfe der ODER-Verknüpfungslogik ist ein einstufiger Boolscher Rechenvorgang zur Generierung der Bildinformationen möglich. Dieser Rechenvorgang kann softwaremäßig durch ein Programm oder hardwaremäßig beispielsweise mit Hilfe eines ASIC auf schnelle Art und Weise durchgeführt werden.

Der Anwender eines elektrografischen Druck- oder Kopiergeräts muß nur einen Zeichensatz für beide Bildgenerierungsarten bereithalten. Nach außen verhalten sich die nach den unterschiedlichen Bildgenerierungsmethoden arbeitenden elektrografischen Druck- oder Kopiergeräte identisch.

Gemäß einer Weiterbildung und Ausgestaltung der Erfindung ist als Bildwiedergabeeinrichtung (4) ein Zeichengenerator vorgesehen, der mindestens eine steuerbare Lichtquelle aufweist, mittels derer auf die Oberfläche einer fotoempfindlichen Schicht die generierte Bildinformation übertragbar ist. Der Durchmesser des auf der fotoempfindlichen Schicht auftreffenden Lichtstrahls ist so einstellbar, daß er größer ist als der Abstand zweier Rasterpunkte zueinander. Durch Verändern des Durchmessers des Lichtstrahls kann der Überlappungsgrad eingestellt werden. Üblich ist ein Überlappungsgrad zwischen 1,4 und 2. Durch Verändern des Überlappungsgrads - auch über die üblichen Grenzen hinaus - kann das Druckbild optimiert werden.

Gemäß einer ersten Variante werden der ODER-verknüpfungslogik zur Generierung der Bildinformation eines Rasterpunktes in der Spalte (n) und der Zeile (m) die zur positiven Bildgenerierung geeigneten Bildinformationen vierer unmittelbar benachbarter, ein Rechteck bildender Rasterpunkte zur Verknüpfung zugeführt. Ist an einem dieser Rasterpunkte die Bildinformation gesetzt, dann wird die Bildinformation des zu erzeugenden Rasterpunktes ebenfalls gesetzt.

Gemäß einer zweiten Variante werden der ODER-Verknüpfungslogik zur Generierung der Bildinformation eines Rasterpunktes in der Spalte (n) und der Zeile (m) die zur positiven Bildgenerierung geeigneten Bildinformationen von fünf benachbarten Rasterpunkten zugeführt. Der zu generierende Rasterpunkt liegt im Kreuzungspunkt der kreuzförmig angeordneten, miteinander verknüpften Rasterpunkte.

Im folgenden werden Beispiele der vorliegenden Erfindung anhand der Zeichnung näher erläutert. Dabei zeigen

Figur 1 ein Blockschaltbild des Systems zur Umsetzung von Bildinformationen,

Figur 2 eine Matrix mit einem invers aus vier Rasterpunkten mit gesetzter Bildinformation erzeugten Tonerpunkt auf einer fotoempfindlichen Schicht,

Figur 3 eine Matrix mit einer Bildzeile aus Tonerpunkten gemäß Figur 1,

Figur 4 eine Matrix mit einer Diagonale aus Tonerpunkten gemäß Figur 1 und

Figur 5 eine Matrix mit einem invers aus fünf Rasterpunkten mit gesetzter Bildinformation erzeugten Tonerpunkt auf einer fotoempfindlichen Schicht.

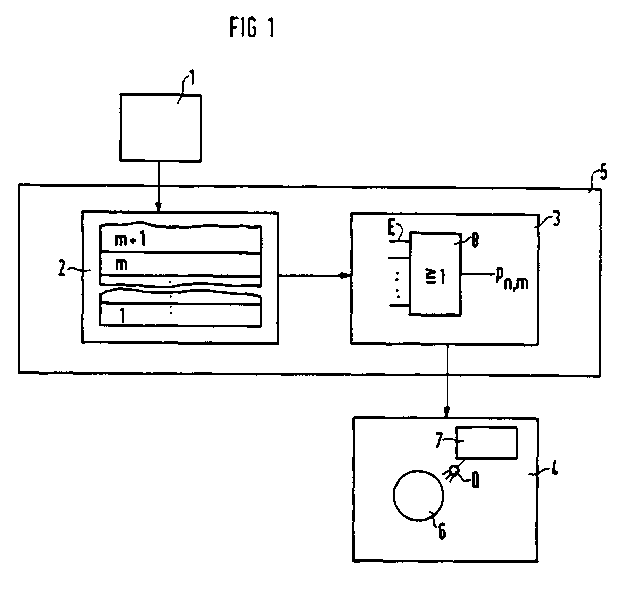

Gemäß Figur 1 überträgt eine Datenaufbereitungseinrichtung 1 binäre, in Matrixform zur positiven Bildgenerierung aufbereitete Bildinformationen zu einer Umsetzeinrichtung 5. Die Umsetzeinrichtung 5 enthält eine Speichereinrichtung 2, deren Größe so bemessen ist, daß mindestens die Bildinformationen zweier vollständiger Bildzeilen m einschreibbar sind. Jede einzelne Bildinformation ist einem Rasterpunkt P der Matrix zugeordnet. Die in der Speichereinrichtung 2 gespeicherten Bildinformationen werden von einer Verknüpfungslogik 3 bedarfsweise ausgelesen.

Die Verknüpfungslogik 3 enthält - neben nicht dargestellten Steuermitteln - abhängig von der geforderten Verarbeitungsgeschwindigkeit eine oder mehrere in einem ASIC-Baustein realisierte ODER-Verknüpfungsglieder 8, deren Eingänge E wahlfrei mittels bekannter Steuerungstechniken auf die in der Speichereinrichtung 2 gespeicherten Bildinformationen zugreifen können. Maximale Verarbeitungsgeschwindigkeit zur Generierung der Bildinformationen einer Zeile m wird dann erreicht, wenn jedem Rasterpunkt P einer Zeile m ein Verknüpfungsglied 8 zugeordnet ist.

Gemäß dem ersten Ausführungsbeispiel weist ein ODER-Verknüpfungsglied 8 vier Eingänge E auf. Jedem Eingang E wird die für positive Bildgenerierung geeignete Bildinformation jeweils eines Rasterpunktes P zugeführt. Die durch die ODER-Verknüpfung generierten, für inverse Bildgenerierung geeigneten Bildinformationen der Rasterpunkte P einer Zeile m werden direkt oder über einen nicht dargestellten Pufferspeicher einem Zeichengenerator 7 zugeführt.

Der Zeichengenerator 7 weist eine steuerbare Lichtquelle Q auf, mit deren Hilfe eine fotoleitende Schicht 6 an den Rasterpunkten P belichtet wird, an denen die Bildinformation nicht gesetzt ist. Es versteht sich, daß bei Verwendung eines Zeichengenerators 7, der die fotoleitende Schicht 6 an den Rasterpunkten P mit gesetzter Bildinformation belichtet, die Ausgangsinformation der Verknüpfungslogik 3 invertiert werden muß, bevor sie einem solchen Zeichengenerator 7 zugeführt wird.

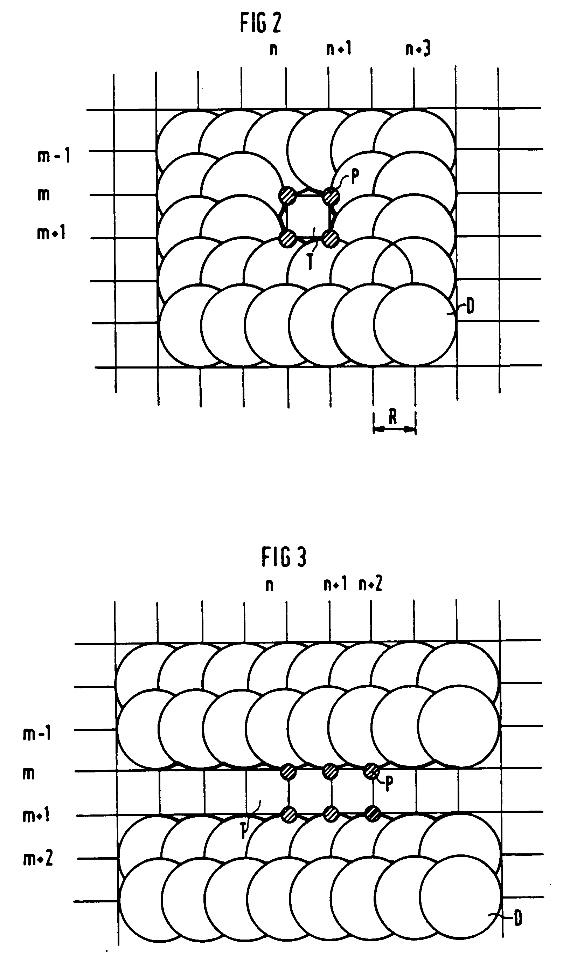

Figur 2 zeigt eine Matrix mit einem invers aus vier Rasterpunkten P mit gesetzter Bildinformation erzeugten Tonerpunkt T auf einer fotoempfindlichen Schicht 6. Die Matrix besteht aus Spalten n und Zeilen m. Jeder Kreuzungspunkt einer Zeile m mit einer Spalte n repräsentiert einen Rasterpunkt P. Auf der fotoempfindlichen Schicht 6 soll, gemäß der aus der Datenaufbereitungseinrichtung 1 stammenden, für positive Bildgenerierung geeigneten Bildinformation, nur am Rasterpunkt $P_{m,n}$ in der Zeile m und der Spalte n ein Tonerpunkt T abgebildet werden.

Würde nun diese Bildinformation ohne Zwischenschaltung der Umsetzeinrichtung 5 direkt an den Zeichengenerator 7 gegeben, dann würde der Zeichengenerator 7 alle Rasterpunkte P der Matrix mit Ausnahme des Rasterpunktes $P_{m,n}$ mit einem Lichtkegel des Durchmessers D belichten. Bei gegebenem Überlappungsgrad von zwei würde diese Art der Belichtung jedoch dazu führen, daß die fotoempfindliche Schicht 6 völlig entladen würde und damit kein Tonerpunkt T abgebildet würde.

Die zwischen Datenaufbereitungseinrichtung 1 und Zeichengenerator 7 eingeschaltete Umsetzeinrichtung 5 sorgt jedoch dafür, daß der Tonerpunkt T beim Rasterpunkt $P_{m,n}$ zuverlässig abgebildet wird. Zur Generierung dieses Tonerpunktes T werden in der Speichereinrichtung 2 die Zeilen m und m+1 gespeichert. Zunächst werden nun die zur inversen Bildgenerierung geeigneten Bildinformationen der Rasterpunkte P der Zeile m+1 generiert. Zur Generierung der Bildinformation jedes Rasterpunktes P dieser Zeile m+1 verknüpft die Verknüpfungslogik 3 die Bildinformationen eines Viererblocks von Rasterpunkten P. Ein Viererblock enthält vier ein Rechteck bildende, unmittelbar benachbarte Rasterpunkte P. Beispielsweise wird die Bildinformation des Rasterpunktes $P_{m+1,n+3}$ durch ODER-Verknüpfung der Bildinformation dieses Rasterpunktes $P_{m+1,n+3}$ mit den Bildinformationen der Rasterpunkte $P_{m+1,n+2}$, $P_{m,n+2}$ und $P_{m,n+3}$ erzeugt. Da keine Bildinformation dieser vier Rasterpunkte $P_{m+1,n+2}$, $P_{m,n+2}$, $P_{m,n+3}$, $P_{m+1,n+3}$ gesetzt war, wird auch die zur inversen Bildgenerierung geeignete Bildinformation am Rasterpunkt $P_{n+1,n+3}$ nicht gesetzt.

Betrachtet man die Generierung der Bildinformation des Rasterpunktes $P_{m+1,n+1}$, dann ergibt sich aus der ODER-Verknupfung der Bildinformationen der Rasterpunkte $P_{m+1,n}$, $P_{m,n}$, $P_{m,n+1}$ und $P_{m+1,n+1}$ ein Setzen der für inverse Bildgenerierung geeigneten Bildinformation des Rasterpunktes $P_{m+1,n+1}$. Dieses Setzen erfolgt, weil die für positive Bildgenerierung geeignete Bildinformation am Rasterpunkt $P_{m,n}$ gesetzt ist. Auf die gleiche Weise werden sämtliche Rasterpunkte P der Zeile m+1 behandelt. Ergebnis des Verknüpfungsvorgangs sind die gesetzten, für inverse Bildgenerierung geeigneten Bildinformationen der Rasterpunkte $P_{m+1,n}$ und $P_{m+1,n+1}$. Die für inverse Bildgenerierung geeigneten Bildinformationen der Zeile m+1 sind damit generiert und können an den Zeichengenerator 7 ausgegeben werden.

Zur Generierung der für inverse Bildgenerierung geeigneten Bildinformationen der Rasterpunkte P der Zeile m müssen nun die für positive Bildgenerierung geeigneten Bildinformationen der Zeile m-1 in die Speichereinrichtung 2 geschrieben werden. Die Bildinformationen Zeile m+1 können dabei überschrieben werden, weil sie nicht mehr benötigt werden. Die Bildinformationen der einzelnen Rasterpunkte P der Zeile m werden durch die oben beschriebene Verknüpfung jeweils eines Viererblocks von Rasterpunkten P generiert. Nach Beendigung des verknüpfungsvorgangs sind die Rasterpunkte $P_{m,n+1}$ und $P_{m,n}$ gesetzt. Bei der Generierung für inverse Bildgenerierung geeigneten Bildinformationen der nachfolgenden Zeile m-1 ergibt sich, daß keine Bildinformation eines Rasterpunkts P gesetzt wird.

In Figur 2 erkennt man nun, daß als Ergebnis des Belichtungsvorgangs des Zeichengenerators 7 auf der fotoempfindlichen Schicht 6 ein als achteckiges Feld (siehe dicke Umrandung) ausgebildeter Tonerpunkt T unbelichtet bleibt, dessen Ecken durch die Rasterpunkte $P_{m+1,n}$, $P_{m+1,n+1}$, $P_{m,n}$ und $P_{m,n+1}$ markiert sind, deren Bildinformationen im Generierungsvorgang gesetzt wurden. An diesem Tonerpunkt T bleibt die Ladung der fotoempfindlichen Schicht 6 erhalten. Dieser geladene Bereich wird in einem dem Belichtungsvorgang nachgeordneten Vorgang mit Toner eingefärbt. Der Toner wird anschließend auf einen nicht dargestellten Aufzeichnungsträger übertragen.

Der invers erzeugte Tonerpunkt T ist nicht exakt deckungsgleich mit einem für einen entsprechenden Rasterpunkt $P_{n,m}$ positiv erzeugten Tonerpunkt T. Da die geringe Ortsabweichung für jeden Tonerpunkt T gleich ist, ist sie für die Qualität der Bildwiedergabe unerheblich. Eine eventuell störende örtliche Verschiebung des übertragenen Bildes auf dem Aufzeichnungsträger kann durch ein Offset ausgeglichen werden.

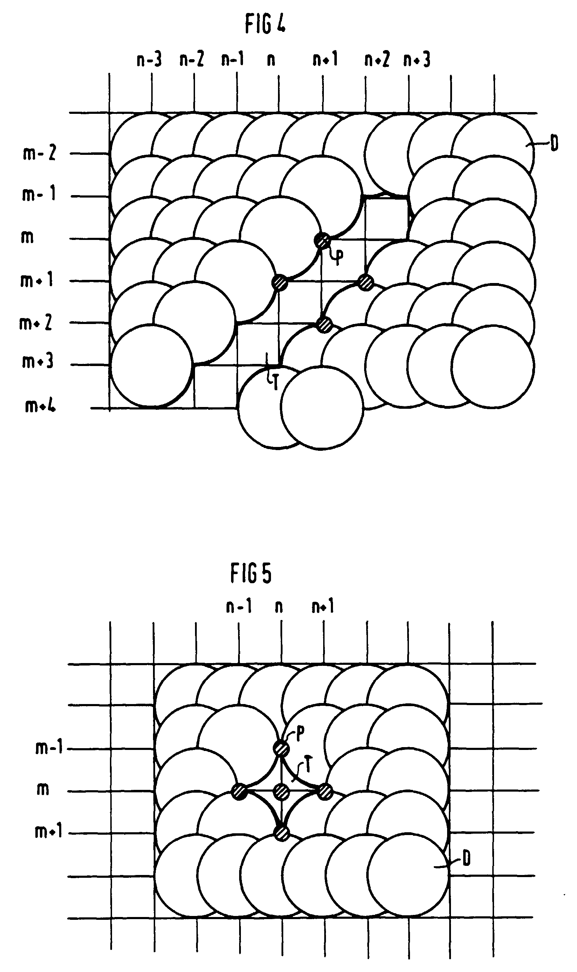

Die gleiche Viererblocklogik, wie zur Erzeugung des Tonerpunktes T am Rasterpunkt $P_{m,n}$ dargestellt, liegt auch der Erzeugung einer Geraden gemäß Figur 3 und einer Diagonalen gemäß Figur 4 zugrunde.

In den für positive Bildgenerierung geeigneten Bildinformationen für eine Linie gemäß Figur 3, sind sämtliche Bildinformationen der Rasterpunkte P der Zeile m gesetzt. Eine Verknüpfung der Bildinformationen der Rasterpunkte P der Zeilen m+1 und m, ergibt das Setzen sämtlicher Bildinformationen der Rasterpunkte P der Zeile m+1. Eine Verknüpfung der Bildinformationen der Rasterpunkte P der Zeilen m und m-1 ergibt, daß sämtliche Bildinformationen der Rasterpunkte P der Zeile m gesetzt bleiben. Dadurch entsteht, wie in Figur 3 dargestellt, ein unbelichteter Bereich (siehe dicke Umrandung) auf der fotoempfindlichen Schicht 6. Dieser unbelichtete Bereich besteht aus einer Aneinanderreihung von Tonerpunkten T und ist durch den Zwischenraum zwischen den Rasterpunkten P der Zeilen m und m+1 markiert.

Der Generierung der Diagonalen gemäß Figur 4 liegt die für positive Bildgenerierung geeignete Bildinformation zugrunde, wonach die Bildinformationen folgender Rasterpunkte P gesetzt sind: $P_{m+4,n-3}$, $P_{m+3,n-2}$, $P_{m+2,n-1}$, $P_{m+1,n}$ $P_{m,n+1}$ und $P_{m-1,n+1}$. Es werden nacheinander durch Anwendung der Viererblocklogik die für inverse Bildgenerierung geeigneten Bildinformationen der Rasterpunkte P der Zeilen m+4, m+3... bis m-2 generiert. Bei dieser Generierung werden, zusätzlich zu den gesetzten, für positive Bildgenerierung geeigneten Bildinformationen, die Bildinformationen der Rasterpunkte $P_{m+4,n-1}$, $P_{m+3,n}$, $P_{m+2,n+1}$, $P_{m+1,n+2}$, $P_{m,n+3}$ und $P_{m-1,n+3}$ gesetzt. Diese Rasterpunkte $P_{m+4,n-1}$, $P_{m+3,n}$, $P_{m+2,n+1}$, $P_{m+1,n+2}$, $P_{m,n+3}$, $P_{m-1,n+3}$ und die Rasterpunkte $P_{m+4,n-3}$, $P_{m+3,n-2}$, $P_{m+2,n-1}$, $P_{m+1,n}$ $P_{m+1,n}$, $P_{m-1,n+1}$ deren Bildinformation bereits zur positiven Bildgenerierung gesetzt war, bilden jeweils eine Diagonale. Zwischen diesen beiden Diagonalen entsteht ein unbelichteter Bereich (siehe dicke Umrandung) auf der fotoempfindlichen Schicht 6. Dieser unbelichtete Bereich besteht aus einer Aneinanderreihung von Tonerpunkten T die als Bildinformation eingefärbt und auf einen Aufzeichnungsträger übertragen werden.

Gemäß einem zweiten Ausführungsbeispiel, das in Figur 5 dargestellt ist, werden anstelle der für positive Bildgenerierung geeigneten Bildinformationen von vier Rasterpunkten P die Bildinformationen von fünf Rasterpunkten P miteinander verknüpft. Die Speichereinrichtung 2 weist dazu Speicherplatz zur Aufnahme dreier Zeilen m einer Matrix auf. Es soll ein Tonerpunkt T am Rasterpunkt $P_{m,n}$ im Kreuzungspunkt der Zeilen m und der Spalte n erzeugt werden. Da der Durchmesser D eines Lichtkegels, ebenso wie beim ersten Ausführungsbeispiel, doppelt so groß ist, wie das Rastermaß R würde dieser Tonerpunkt T ohne Zwischenschaltung der Umsetzeinrichtung 5 nicht auf der fotoempfindlichen Schicht 6 abgebildet werden. Zur Generierung der für inverse Bildgenerierung geeigneten Bildinformation dieses Rasterpunktes $P_{m,n}$, werden die (m+2)-te, die (m+1)-te, die (m)-te, die (m-1)-te und die (m-2)-te Bildzeile benötigt. Die in der Verknüpfungslogik 3 zu verknüpfenden Bildinformationen der Rasterpunkte P sind auf der Matrix kreuzförmig angeordnet. So bilden beispielsweise die Rasterpunkte $P_{m+1,n}$, $P_{m,n-1}$, $P_{m,n}$, $P_{m,n+1}$ und $P_{m-1,n}$ ein solches Kreuz.

Zunächst werden die für inverse Bildgenerierung geeigneten Bildinformationen der Rasterpunkte P der Zeile m+1 generiert. Zur Generierung der Bildinformationen dieser Rasterpunkte P werden die für positive Bildgenerierung geeigneten Bildinformationen der Zeilen m, m+1 und m+2 benötigt. In all diesen Zeilen ist nur die Bildinformation des Rasterpunktes $P_{m,n}$ gesetzt. Demzufolge ergibt lediglich die ODER-Verknüpfung zur Generierung der Bildinformation des Rasterpunktes $P_{m+1,n}$ ein Ergebnis, wonach diese Bildinformation gesetzt wird. Zur Generierung der Bildinformation des Rasterpunktes $P_{m+1,n}$, werden folgende Rasterpunkte P der ODER-Verknüpfungslogik 3 zugeführt: $P_{m+2,n}$, $P_{m+1,n-1}$, $P_{m+1,n}$, $P_{m+1,n+1}$ und $P_{m,n}$.

Zur Generierung der für inverse Bildgenerierung geeigneten Bildinformationen der Rasterpunkte P der Zeile m wird zusätzlich die Zeile m-1 in die Speichereinrichtung 2 eingeschrieben. Dabei kann die Zeile m+2 überschrieben werden. Die für positive Bildgenerierung geeigneten Bildinformationen der drei in der Speichereinrichtung 2 verbleibenden Zeilen m-1, m, m+1 werden nacheinander in Gruppen zu fünf Rasterpunkten P, die kreuzweise angeordnet sind, miteinander verknüpft. So wird beispielsweise die Bildinformation des Rasterpunktes $P_{m,n+1}$ durch die ODER-Verknüpfung der Bildinformationen der Rasterpunkte $P_{m+1,n+1}$, $P_{m,n}$, $P_{m,n+1}$, $P_{m,n+2}$ und $P_{m-1,n+1}$ erzeugt. Nach Abarbeitung aller Verknüpfungsoperationen zwischen den Zeilen m-1, m und m+1 sind die Bildinformationen der Rasterpunkte $P_{m,n-1}$, $P_{m,n}$ und $P_{m,n+1}$ gesetzt. Die Generierung der für inverse Bildgenerierung geeigneten Bildinformationen der Rasterpunkte P der Zeile m-1 aus den für positive Bildgenerierung geeigneten Bildinformationen der Bildzeilen m-2, m-1 und m ergibt eine gesetzte Bildinformation für den Rasterpunkt $P_{m-1,n}$.

Die Umsetzeinrichtung 5 erzeugt also aus einer gesetzten Bildinformation für den Rasterpunkt $P_{m,n}$ fünf gesetzte Bildinformationen für die in Kreuzform angeordneten Rasterpunkte $P_{m,n-1}$, $P_{m,n}$, $P_{m,n+1}$, $P_{m+1,n}$ und $P_{m-1,n}$. Die den Kreuzungspunkt $P_{m,n}$ umgebenden Rasterpunkte P markieren die Eckpunkte einer Raute, die dem Tonerpunkt T entspricht. Die Fläche dieser Raute wird auf der fotoempfindlichen Schicht 6 nicht belichtet und demzufolge nicht entladen. Auf der Rautenfläche können sich Tonerteilchen ablagern und auf einen Aufzeichnungsträger als sichtbarer Bildpunkt übertragen werden.

**Patentansprüche**

1.  System zur Umsetzung von in Matrixform vorliegenden, für positive Bildgenerierung geeigneten Bildinformationen in für inverse Bildgenerierung geeignete Bildinformationen für ein elektrografisches Druck- oder Kopiergerät, bei dem

    - eine Datenaufbereitungseinrichtung (1) mit einer Umsetzeinrichtung (5) gekoppelt ist,
    - die Umsetzeinrichtung (5) eine Speichereinrichtung (2) zum speichern mindestens zweier aufeinanderfolgender Zeilen (m) der für positive Bildgenerierung geeigneten Bildinformationen enthält,
    - die Umsetzeinrichtung (5) eine mit der Speichereinrichtung (2) gekoppelte Verknüpfungslogik (3) enthält, die zur Generierung einer für inverse Bildgenerierung geeigneten Bildinformation eines Rasterpunktes (P) die zur positiven Bildgenerierung geeignete Bildinformation dieses Rasterpunktes (P) mit mindestens einer weiteren solchen Bildinformation eines benachbarten Rasterpunktes (P) ODER-verknüpft, und
    - die Umsetzeinrichtung (5) mit einer Bildwiedergabeeinrichtung (4) gekoppelt ist.

2.  System zur Umsetzung von Bildinformationen nach Anspruch 1, bei dem die zur positiven Bildgenerierung geeigneten Bildinformtionen zeilenweise an die Umsetzeinrichtung (5) abgebbar und die für inverse Bildgenerierung geeigneten Bildinformationen zeilenweise von dieser ausgebbar sind, und bei dem nicht mehr benötigte, zur positiven Bildgenerierung geeignete Bildinformationen in der Speichereinrichtung (2) zeilenweise überschreibbar sind.

3.  System zur Umsetzung von Bildinformationen nach einem der Ansprüche 1 oder 2, bei dem

    - als Bildwiedergabeeinrichtung (4) ein Zeichengenerator (7) vorgesehen ist, der mindestens eine steuerbare Lichtquelle (Q) aufweist, mittels derer auf die Oberfläche einer fotoempfindlichen Schicht (6) die generierte Bildinformation übertragbar ist, und
    - der Durchmesser (D) des auf der fotoempfindlichen Schicht (6) auftreffenden Lichtstrahls so einstellbar ist, daß er größer ist als der Abstand zweier Rasterpunkte (P) zueinander.

4.  System zur Umsetzung von Bildinformationen nach einem der Ansprüche 1 bis 3, bei dem die ODER-Verknüpfungslogik (3) zur Generierung der Bildinformation eines Rasterpunktes ($P_{n,m}$) in der Spalte (n) und der Zeile (m) die zur positiven Bildgenerierung geeigneten Bildinformationen

    - des Rasterpunktes ($P_{n-1,m}$) in der Spalte (n-1) und der Zeile (m),
    - des Rasterpunktes ($P_{n-1,m-1}$) in der Spalte (n-1) und der Zeile (m-1),
    - des Rasterpunktes ($P_{n,m-1}$) in der Spalte (n) und der Zeile (m-1)und
    - des Rasterpunktes ($P_{n,m}$) in der Spalte (n) und der Zeile (m)

    verknüpft.

5.  System zur Umsetzung von Bildinformationen nach einem der Ansprüche 1 bis 3, bei dem die ODER-Verknüpfungslogik (3) zur Generierung der Bildinformation eines Rasterpunktes ($P_{n,m}$) in der Spalte (n) und der Zeile (m) die zur positiven Bildgenerierung geeigneten Bildinformationen

    - des Rasterpunktes ($P_{n,m-1}$) in der Spalte (n) und der Zeile (m-1),
    - des Rasterpunktes ($P_{n-1,m}$) in der Spalte (n-1) und der Zeile (m),
    - des Rasterpunktes ($P_{n,m}$) in der Spalte (n) und der Zeile (m),
    - des Rasterpunktes ($P_{n+1,m}$) in der Spalte (n+1) und der Zeile (m) und
    - des Rasterpunktes ($P_{n,m+1}$) in der Spalte (n) und der Zeile (m+1)

    verknüpft.

6.  Verfahren zur Umsetzung von in Matrixform vorliegenden, für positive Bildgenerierung geeigneten Bildinformationen in für inverse Bildgenerierung geeignete Bildinformationen für ein elektrografisches Druck- oder Kopiergerät, bei dem

    - eine Datenaufbereitungseinrichtung (1) an eine in einer Umsetzeinrichtung (5) enthaltene Speichereinrichtung (2) für positive Bildgenerierung geeignete Bildinformationen überträgt,
    - eine mit der Speichereinrichtung (2) gekoppelte, in der Umsetzeinrichtung (5) enthaltene Verknüpfungslogik (3) zur Generierung einer für inverse Bildgenerierung geeigneten Bildinformation eines Rasterpunktes (P) die zur positiven Bildgenerierung geeignete Bildinformation dieses Rasterpunktes (P) und mindestens eine weitere solche Bildinformation eines benachbarten Rasterpunktes (P) aus der Speichereinrichtung (2) ausliest und diese Bildinformationen ODER-verknüpft, und

- die Umsetzeinrichtung (5) die generierte Bildinformation an eine Bildwiedergabeeinrichtung (4) ausgibt.

7. Verfahren zur Umsetzung von Bildinformationen nach Anspruch 6, bei dem die zur positiven Bildgenerierung geeigneten Bildinformtionen zeilenweise an die Umsetzeinrichtung (5) übermittelt werden und die für inverse Bildgenerierung geeigneten Bildinformationen zeilenweise an die Bildwiedergabeeinrichtung (4) ausgegeben werden, und bei dem nicht mehr benötigte, zur positiven Bildgenerierung geeignete Bildinformationen in der Speichereinrichtung (2) zeilenweise überschreibbar sind.

8. Verfahren zur Umsetzung von Bildinformationen nach einem der Ansprüche 6 oder 7, bei dem

- die Datenaufbereitungseinrichtung (1) die zur positiven Bildgenerierung geeigneten Bildinformationen der Zeilen (m-1) und (m) an die Speichereinrichtung (2) überträgt,
- die ODER-Verknüpfungslogik (3) zur Generierung der für inverse Bildgenerierung geeigneten Bildinformationen der Rasterpunkte ($P_{n,m}$) der Zeile (m) die in der Speichereinrichtung (2) gespeicherten Bildinformationen
- des Rasterpunktes ($P_{n-1,m}$) in der Spalte (n-1) und der Zeile (m),
- des Rasterpunktes ($P_{n-1,m-1}$) in der Spalte (n-1) und der Zeile (m-1),
- des Rasterpunktes ($P_{n,m-1}$) in der Spalte (n) und der Zeile (m-1) und
- des Rasterpunktes ($P_{n,m}$) in der Spalte (n) und der Zeile (m)

verknüpft, wobei gilt: m = konstant und n $\in$ N,

- die Datenaufbereitungseinrichtung (1) die zur positiven Bildgenerierung geeigneten Bildinformationen der nachfolgenden Zeile (m-2) an die Speichereinrichtung (2) zur nachfolgenden Generierung der für inverse Bildgenerierung geeigneten Bildinformationen der (m-1)-ten Zeile überträgt.

9. Verfahren zur Umsetzung von Bildinformationen nach einem der Ansprüche 6 oder 7, bei dem

- die Datenaufbereitungseinrichtung (1) die zur positiven Bildgenerierung geeigneten Bildinformationen der Zeilen (m-1), (m) und (m+1) an die Speichereinrichtung überträgt,

- die ODER-Verknüpfungslogik (3) zur Generierung der für inverse Bildgenerierung geeigneten Bildinformationen der Rasterpunkte ($P_{n,m}$) der Zeile (m) die in der Speichereinrichtung (2) gespeicherten Bildinformationen

- des Rasterpunktes ($P_{n,m-1}$) in der Spalte (n) und der Zeile (m-1),
- des Rasterpunktes ($P_{n-1,m}$) in der Spalte (n-1) und der Zeile (m),
- des Rasterpunktes ($P_{n,m}$) in der Spalte (n) und der Zeile (m),
- des Rasterpunktes ($P_{n+1,m}$) in der Spalte (n+1) und der Zeile (m) und
- des Rasterpunktes ($P_{n,m+1}$) in der Spalte (n) und der Zeile (m+1)

verknüpft, wobei gilt: m = konstant und n $\in$ N,
- die Datenaufbereitungseinrichtung (1) die zur positiven Bildgenerierung geeigneten Bildinformationen der nachfolgenden Zeile (m-2) an die Speichereinrichtung (2) zur nachfolgenden Generierung der für inverse Bildgenerierung geeigneten Bildinformationen der (m-1)-ten Zeile überträgt.

**Claims**

1. System for converting image information in matrix form and suitable for positive image generation into image information suitable for inverse image generation for an electrographic printer or copier, in which system

- a data processing device (1) is coupled to a converting device (5),
- the converting device (5) comprises a storage device (2) for storing at least two consecutive lines (m) of the image information suitable for positive image generation,
- the converting device (5) comprises a logic combining means (3) which is coupled to the storage device (2) and logically ORs the image information suitable for positive image generation of a pixel (P) with at least one further such item of image information of an adjacent pixel (P) in order to generate an item of image information suitable for inverse image generation of said pixel (P), and
- the converting device (5) is coupled to an image reproduction device (4).

2. System for converting image information according to Claim 1, in which system the image information suitable for positive image generation can be communicated line by line to the converting device (5) and the image information suitable for inverse image generation can be output by the latter line by line, and in which system image information which is in the storage device (2), is no longer needed and is suitable for positive image generation can be overwritten line by line.

3. System for converting image information according to either of Claims 1 and 2, in which system

- a character generator (7) is provided as the image reproduction device (4), which has at least one controllable light source (Q) by means of which the generated image information can be transmitted onto the surface of a photosensitive layer (6), and
- the diameter (D) of the light beam incident on the photosensitive layer (6) can be set such that it is greater than the spacing of two pixels (P) from each other.

4. System for converting image information according to one of Claims 1 to 3, in which system the OR logic combining means (3), in order to generate the image information of a pixel ($P_{n,m}$) in the column (n) and the line (m), logically combines the image information suitable for positive image generation of

- the pixel ($P_{n-1,m}$) in the column (n-l) and the line (m),
- the pixel ($P_{n-1,m-1}$) in the column (n-1) and the line (m-1),
- the pixel ($P_{n,m,1}$) in the column (n) and the line (m-1) and.
- the pixel ($P_{n,m}$) in the column (n) and the line (m).

5. System for converting image information according to one of Claims 1 to 3, in which system the OR logic combining means (3), in order to generate the image information of a pixel ($P_{n,m}$) in the column (n) and the line (m), logically combines the image information suitable for positive image generation of

- the pixel ($P_{n,m-1}$) in the column (n) and the line (m-1),
- the pixel ($P_{n-1,m}$) in the column (n-1) and the line (m),
- the pixel ($P_{n,m}$) in the column (n) and the line (m),
- the pixel ($P_{n+1,m}$) in the column (n+1) and the line (m) and
- the pixel ($P_{n,m+1}$) in the column (n) and the line (m+1).

6. Process for converting image information in matrix form and suitable for positive image generation into image information suitable for inverse image generation for an electrographic printer or copier, in which process

- a data processing device (1) transmits image information suitable for positive image generation to a storage device (2) contained in a converting device (5),
- a logic combining means (3) which is coupled to the storage device (2) and contained in the converting device (5) reads the image information suitable for positive image generation of a pixel (P) and at least one further such item of image information of an adjacent pixel (P) from the storage device (2) and ORs these items of image information in order to generate an item of image information suitable for inverse image generation of said pixel (P), and
- the converting device (5) outputs the generated image information to an image reproduction device (4).

7. Process for converting image information according to Claim 6, in which process the image information suitable for positive image generation can be communicated line by line to the converting device (5) and the image information suitable for inverse image generation can be output line by line to the image reproduction device (4), and in which process image information which is in the storage device (2), is no longer needed and is suitable for positive image generation can be overwritten line by line.

8. Process for converting image information according to either of Claims 6 and 7, in which process

- the data processing device (1) transmits to the storage device (2) the image information suitable for positive image generation of the lines (m-1) and (m),
- the OR logic combining means (3), in order to generate the image information suitable for inverse image generation of the pixels ($P_{n,m}$) of the line (m), logically combines the image information stored in the storage device (2) of

- the pixel ($P_{n-1,m}$) in the column (n-1) and the line (m),
- the pixel ($P_{n-1,m-1}$) in the column (n-1) and the line (m-1),
- the pixel ($P_{n,m-1}$) in the column (n) and the line (m-1) and
- the pixel ($P_{n,m}$) in the column (n) and the line (m),

where m = constant and n $\in$ N,

- the data processing device (1) transmits the image information suitable for positive image generation of the following line (m-2) to the storage device (2) for the subsequent generation of the image information suitable for inverse image generation of the (m-1) th line.

9. Process for converting image information according to either of Claims 6 and 7, in which process

- the data processing device (1) transmits to the storage device the image information suitable for positive image generation of the lines (m-1), (m) and (m+1),
- the OR logic combining means (3), in order to generate the image information suitable for inverse image generation of the pixels ($P_{n,m}$) of the line (m), logically combines the image information stored in the storage device (2) of

  - the pixel ($P_{n,m-1}$) in the column (n) and the line (m-1),
  - the pixel ($P_{n-1,m}$) in the column (n-1) and the line (m),
  - the pixel ($P_{n,m}$) in the column (n) and the line (m),
  - the pixel ($P_{n+1,m}$) in the column (n+1) and the line (m) and
  - the pixel ($P_{n,m+1}$) in the column (n) and the line (m+1)

  where m = constant and n $\in$ N,
- the data processing device (1) transmits the image information suitable for positive image generation of the following line (m-2) to the storage device (2) for the subsequent generation of the image information suitable for inverse image generation of the (m-1)th line.

**Revendications**

1. Système de conversion d'informations image se présentant sous forme de matrice et aptes à la génération d'image positive en informations image aptes à la génération d'image inverse pour une imprimante ou un copieur électrographique, dans lequel

- un dispositif de préparation des données (1) est couplé à un dispositif de conversion (5),
- le dispositif de conversion (5) comporte un dispositif de mémoire (2) pour enregistrer au moins deux lignes (m) consécutives des informations image aptes à la génération d'image positive,
- le dispositif de conversion (5) comporte une logique de liaison (3) couplée au dispositif de mémoire (2), qui pour générer une information image apte à la génération d'image inverse d'un point de grille (P), lie l'information image apte à la génération d'image positive de ce point de grille (P) par opération OU à au moins une autre information image de ce type d'un point de grille (P) contigu, et
- le dispositif de conversion (5) est couplé à un dispositif de reproduction d'image (4).

2. Système de conversion d'informations image selon la revendication 1, dans lequel les informations image aptes à la génération d'image positive peuvent être transmises ligne par ligne au dispositif de conversion (5), lequel peut sortir ligne par ligne les informations image aptes à la génération d'image inverse, et dans lequel des informations image aptes à la génération d'image positive devenues inutiles peuvent être écrasées ligne par ligne dans le dispositif de mémoire (2).

3. Système de conversion d'informations image selon l'une des revendications 1 ou 2, dans lequel

- En tant que dispositif de reproduction est prévu un générateur de caractères (7) d'image (4) qui comporte au moins une source lumineuse (Q) pilotable permettant de transmettre l'information image générée sur la surface d'une couche photosensible (6), et
- le diamètre (D) du faisceau lumineux heurtant la couche photosensible (6) est réglable de manière à être supérieur à la distance séparant deux points de grille (P) l'un de l'autre.

4. Système de conversion d'informations image selon l'une des revendications 1 à 3, dans lequel la logique de liaison OU (3) pour générer l'information image d'un point de grille ($P_{n,m}$) dans la colonne (n) et la ligne (m) lie les informations image aptes à la génération d'image positive

- du point de grille ($P_{n-1,m}$) dans la colonne (n-1) et la ligne (m),
- du point de grille ($P_{n-1,m-1}$) dans la colonne (n-1) et la ligne (m-1),
- du point de grille ($P_{n,m-1}$) dans la colonne (n) et la ligne (m-1), et
- du point de grille ($P_{n,m}$) dans la colonne (n) et la ligne (m).

5. Système de conversion d'informations image selon l'une des revendications 1 à 3, dans lequel la logique de liaison OU (3) pour générer l'information image d'un point de grille ($P_{n,m}$) dans la colonne (n) et la ligne (m) lie les informations image aptes à la génération d'image positive

- du point de grille ($P_{n,m-1}$) dans la colonne (n) et la ligne (m-1),
- du point de grille ($P_{n-1,m}$) dans la colonne (n-1) et la ligne (m),
- du point de grille ($P_{n,m}$) dans la colonne (n) et la ligne (m),

- du point de grille ($P_{n+1,m}$) dans la colonne (n+1) et la ligne (m), et
- du point de grille ($P_{n,m+1}$) dans la colonne (n) et la ligne (m+1).

**6.** Procédé de conversion d'informations image se présentant sous forme de matrice et aptes à la génération d'image positive en informations image aptes à la génération d'image inverse pour une imprimante ou un copieur électrographique, dans lequel

- un dispositif de préparation des données (1) transmet des informations image aptes à la génération d'image positive à un dispositif de mémoire (2) contenu dans un dispositif de conversion (5),
- une logique de liaison (3) contenue dans le dispositif de conversion (5) et couplée au dispositif de mémoire (2), pour générer une information image apte à la génération d'image inverse d'un point de grille (P), lit dans le dispositif de mémoire (2) l'information image apte à la génération d'image positive de ce point de grille (P) et au moins une autre information image de ce type d'un point de grille (P) contigu et lie ces informations image par opération OU, et
- le dispositif de conversion (5) transmet cette information image générée à un dispositif de reproduction d'image (4).

**7.** Procédé de conversion d'informations image selon la revendication 6, dans lequel les informations image aptes à la génération d'image positive sont transmises ligne par ligne au dispositif de conversion (5) et les informations image aptes à la génération d'image inverse envoyées ligne par ligne au dispositif de reproduction d'image (4), et dans lequel les informations image aptes à la génération d'image positive devenues inutiles peuvent être écrasées ligne par ligne dans le dispositif de mémoire (2).

**8.** Procédé de conversion d'informations image selon l'une des revendications 6 ou 7, dans lequel

- le dispositif de préparation des données (1) transmet les informations image aptes à la génération d'image positive des lignes (m-1) et (m) au dispositif de mémoire (2),
- la logique de liaison OU (3) pour générer les informations image aptes à la génération d'image inverse des points de grille ($P_{n,m}$) de la ligne (m) lie les informations image enregistrées dans le dispositif de mémoire (2)
  - du point de grille ($_{n-1,m}$) dans la colonne (n-1) et la ligne (m),
  - du point de grille ($P_{n-1,m-1}$) dans la colonne (n-1) et la ligne (m-1),

- du point de grille ($P_{n,m-1}$) dans la colonne (n) et la ligne (m-1), et
- du point de grille ($P_{n,m}$) dans la colonne (n) et la ligne (m),

selon m = constant et n $\in$ N,

- le dispositif de préparation des données (1) transmet les informations image aptes à la génération d'image positive de la ligne suivante (m-2) au dispositif de mémoire (2) pour générer par la suite les informations image aptes à la génération d'image inverse de la ligne (m-1).

**9.** Procédé de conversion d'informations selon l'une des revendications 6 ou 7, dans lequel

- le dispositif de préparation des données (1) transmet les informations image aptes à la génération d'image positive des lignes (m-1), (m) et (m+1) au dispositif de mémoire,
- la logique de liaison OU (3) pour générer les informations image aptes à la génération d'image inverse des points de grille ($P_{n,m}$) de la ligne (m) lie les informations image enregistrées dans le dispositif de mémoire (2)
  - du point de grille ($P_{n,m-1}$), dans la colonne (n) et la ligne (m-1),
  - du point de grille ($P_{n-1,m}$) dans la colonne (n-1) et la ligne (m),
  - du point de grille ($P_{n,m}$) dans la colonne (n) et la ligne (m),
  - du point de grille ($P_{n,1,m}$) dans la colonne (n+1) et la ligne (m), et
  - du point de grille ($P_{n,m+1}$) dans la colonne (n) et la ligne (m+1),

  selon m = constant et n $\in$ N,

- le dispositif de préparation des données (1) transmet les informations image aptes à la génération d'image positive de la ligne suivante (m-2) au dispositif de mémoire (2) pour générer par la suite les informations image aptes à la génération d'image inverse de la ligne (m-1).

## FIG 1

FIG 2

FIG 3

## FIG 4

## FIG 5